# EUROPÄISCHE PATENTSCHRIFT

(11) **EP 0 522 254 B1**
(45) Veröffentlichungstag und Bekanntmachung des Hinweises auf die Patenterteilung: **12.04.1995**
(21) Anmeldenummer: 92107790.5
(22) Anmeldetag: 08.05.1992
(51) Int. Cl.: G01M 3/32

(54) **Verfahren und Vorrichtung zum Prüfen von Behältern**
Method and apparatus for testing of containers
Procédé et dispositif de contrôle des réservoirs

(30) Priorität: 08.07.1991 CH 2022/91; 16.03.1992 CH 846/92
(43) Veröffentlichungstag der Anmeldung: 13.01.1993
(73) Patentinhaber: ELPATRONIC AG, CH-6303 Zug (CH)
(72) Erfinder: Stieger, Othmar, CH-8963 Kindhausen (CH); Wenger, Alfred, CH-8413 Neftenbach (CH)

(56) Entgegenhaltungen:
- EP-A- 0 217 140
- EP-A- 0 279 120
- WO-A-86/00701
- CH-A- 657 209
- DE-A- 3 108 459
- DE-A- 3 722 422
- FR-A- 2 021 300
- US-A- 2 592 984
- US-A- 3 834 429

## Beschreibung

Die Erfindung betrifft ein Verfahren zum Prüfen von Behältern, insbesondere von Glas- oder Kunststoffflaschen, bei welchem ein Kopf abdichtend auf die Mündung des Behälters gesetzt wird, das Innere des Behälters mittels eines relativ zum Kopf verschiebbaren Messkolbens unter Druck gesetzt wird und der Druck mittels eines Drucksensors gemessen wird, um das Behältervolumen zu prüfen.

Die Erfindung betrifft weiter eine Vorrichtung zur Durchführung des Verfahrens, mit einem abdichtend auf eine Mündung des Behälters bewegbaren Kopf, mit einem relativ zu dem Kopf verschiebbaren Messkolben, mittels welchem das Innere des Behälters mit Druck beaufschlagbar ist, und mit einem Drucksensor zum Messen des Druckes im Inneren des Behälters.

Eine solche Vorrichtung ist in Verbindung mit einer Inspektionsmaschine für Kunststoffflaschen aus der DE 37 22 422 C2 bekannt. Bei dieser bekannten Vorrichtung ist die Flasche auf einem Teller durch einen Kopf festspannbar, der an einem vertikal verschiebbaren Schlitten frei drehbar befestigt ist. Durch den Kopf hindurch ist das Innere der Flasche mit Druck beaufschlagbar, der durch einen am Kopf angeordneten Drucksensor erfaßbar ist. Die Druckbeaufschlagung des Inneren des Behälters erfolgt mit Hilfe eines Meßkolbens, der in einem innerhalb des Schlittens vorgesehenen Zylinder quer zu dem Kopf verschiebbar ist. Eine mit dem Meßkolben verbundene Kolbenstange ist durch eine am Maschinengestell befestigte Kurvenscheibe über eine Abtastrolle gegen den Druck einer Rückstellfeder verschiebbar. Auf der der Rückstellfeder zugewandten Seite des Meßkolbens befindet sich ein Zylinderraum. Die in diesem Zylinderraum befindliche Luftmenge wird bei der Verschiebung des Meßkolbens über eine in dem Kopf vorgesehene Bohrung jeweils in die Flasche gepreßt, wobei der sich dabei in dem Flascheninneren aufbauende Druck durch den Drucksensor erfaßt wird. Eine Auswerteelektronik vergleicht diesen Druck mit einem Grenzwert und betätigt später einen Auswerfer bei zu großer Abweichung von diesem Grenzwert. Eine Flasche mit Nennvolumen hat einen bestimmten Druckgrenzwert. Wenn das Volumen der Flasche kleiner oder größer als das Nennvolumen ist, wird beim Einpressen des genannten Luftvolumens der Druckgrenzwert über- bzw. unterschritten.

Die vorgenannte Inspektionsmaschine ist hauptsächlich zum Inspizieren von Rückgabeflaschen aus Kunststoff bestimmt, d.h. von Flaschen, die vom Kunden zurückgegeben und dann wieder befüllt werden. In einer solchen Inspektionsmaschine arbeitet die bekannte Vorrichtung völlig zufriedenstellend. Es hat sich aber gezeigt, daß Probleme auftreten können, wenn die Vorrichtung in einer Inspektionsmaschine benutzt wird, die bei der Serienherstellung von PET- oder Glasflaschen eingesetzt wird. Auch bei einem solchen Serienherstellprozeß können Volumen-Abweichungen auftreten. Mittels einer Vorrichtung der eingangs genannten Art muß daher das Volumen der Flaschen überprüft werden. Wenn die Volumenabweichungen außerhalb einer bestimmten Toleranz liegen, müssen auch hier die betreffenden Flaschen als fehlerhaft erkannt und ausgeschieden werden. Bei einem solchen Serienherstellprozeß enthalten die üblicherweise aus einer Blasformmaschine kommenden Flaschen temperierte Luft. Das Luftvolumen, das mittels des Meßkolbens in die Flasche gepreßt wird, ist im Vergleich zu dem Volumen der Flasche relativ gering, und entsprechend gering ist der durch das Einpressen des Luftvolumens erzeugte Überdruck. Wenn nun beim Serienherstellprozeß das Meßergebnis auch noch durch Luftvolumina unterschiedlicher Temperaturen beeinflußt wird, lassen sich keine sicheren Meßergebnisse mehr erzielen. Darüber hinaus ist es ohnehin nicht einfach, ein stets gleichbleibendes und möglichst die gleiche Temperatur aufweisendes Fremdluftvolumen bereitzustellen und in eine Flasche zu pressen, da bei der Serienherstellung für die gesamte Prüfzeit pro Flasche üblicherweise weniger als eine Sekunde zur Verfügung steht.

Es hat sich gezeigt, dass die Festlegung des Beginns der Druckmessungen problematisch ist. Ein genauer Startpunkt für die Druckmessungen ist indes unerlässlich, da in der Regel in der sehr kurzen zur Verfügung stehenden Messzeit mehrere Druckmessungen bei verschiedenen, definierten Messbedingungen vorgenommen werden müssen.

Aufgabe der Erfindung ist es daher, auf einfache und sichere Weise den Anfangspunkt für die Prüfung des Behälters festzulegen.

Dies wird erfindungsgemäss dadurch erreicht, dass der Druckverlauf beim Aufsetzen des Kopfes auf den Behälter durch den Drucksensor erfasst und als Startsignal für die nachfolgende Verschiebung des Messkolbens und die Druckmessung verwendet wird.

Es hat sich gezeigt, dass durch die Auswertung des Druckverlaufes beim Aufsetzen des Kopfes äusserst präzis der geeignete Startpunkt für den folgenden Messzyklus festlegbar ist. Da die Erfassung des Druckverlaufes mit dem ohnehin vorhandenden Drucksensor erfolgen kann, ist das Verfahren einfach und kostengünstig durchführbar.

Bevorzugterweise umfasst die Prüfung des Behälters eine Leckagenmessung gemäss Anspruch 2.

Die Erfindung betrifft ferner eine Vorrichtung zur Durchführung des Verfahrens. Diese weist einen Ausgleichskolben zur Kompensation ungleicher Behälterhöhen auf, wie nachfolgend näher beschrieben wird.

Beim Serienherstellprozess von PET-, Glasflaschen und anderen Behältern kann es vorkommen, dass diese in der Höhe variieren. Wenn der Teller oder Förderer, auf dem der Behälter unter die Vorrichtung bewegt wird, stets die gleiche Höhe hat, würde bei variierender Behälterhöhe das durch die Vorrichtung in der Ausgestaltung nach Anspruch 3 erzielte Messergebnis verfälscht werden, weil sich eine variierende Eindringtiefe des Messkolbens in dem Behälter ergeben würde. Es wäre zwar vorstellbar, jeden Behälter entsprechend der variierenden Behälterhöhe in der Vorrichtung anzuheben oder abzusenken, um stets die gleiche Ausgangslage der Behältermündung zu erzielen, das würde jedoch einen erheblichen konstruktiven Aufwand mit sich bringen, der vermieden werden sollte, um die Einfachheit und Betriebssicherheit der Vorrichtung nach der Erfindung nicht zu beeinträchtigen.

In der Ausgestaltung der Erfindung nach Anspruch 3 wird das dadurch erreicht, dass unter Beibehaltung von einer stationären Messkolbenantriebseinrichtung und einer stationären Auflagehöhe der Behälter unterschiedliche Behälterhöhen durch einen stationären Ausgleichskolben kompensiert werden. Ueber einen Kanal ist ein Messvolumen innerhalb des Behälters mit einem Kompensationsvolumen innerhalb eines Kompensationsraums verbunden. Das Kompensationsvolumen wird einerseits durch die konstante Ausgangsposition des Messkolbens und andererseits durch die je nach Behälterhöhe variable Hublänge des Kopfes bestimmt. Bei unterschiedlichen Behälterhöhen sind also immer genau gleiche Kompressionsverhältnisse gegeben.

Ausgleichskolben und Messkolben bräuchten zwar nicht, wie in der Ausgestaltung der Erfindung nach Anspruch 10, den gleichen Durchmesser zu haben, andernfalls müssten jedoch Umrechnungen erfolgen, die feste Verbindung zwischen dem Kopf und dem Zylinder durch eine Verbindung mit veränderlichem Uebersetzungsverhältnis ersetzt werden, od. dgl.

Die Ausgestaltung der Erfindung nach Anspruch 11 stellt eine einfache Möglichkeit dar, das Behälterinnere mit dem Kompensationsraum zu verbinden.

In der Ausgestaltung der Erfindung nach den Ansprüchen 12 bis 14 sorgt ein pneumatischer Drehflügelantrieb für eine konstante, schnelle und gedämpfte Tauchbewegung des Messkolbens mit einem sinusartigen Bewegungsablauf.

Weil der Drehflügelantrieb stationär ist, ist in der Ausgestaltung der Erfindung nach den Ansprüchen 15 und 16 der Kopf als in einem stationären Kurzhubzylinder pneumatisch hin- und herbewegbarer Hubkolben ausgebildet und so unabhängig von der Behälterhöhe stets auf die Behältermündung in einem separaten Dichthub aufsetzbar.

Ein Ausführungsbeispiel der Erfindung wird im folgenden unter Bezugnahme auf die Zeichnungen näher beschrieben. Es zeigt
Fig. 1 in Seitenansicht und im Schnitt eine Vorrichtung nach der Erfindung,
Fig. 2 als Einzelheit einen in der Vorrichtung nach Fig. 1 verwendeten Kurbeltrieb in zwei verschiedenen Betriebsstellungen desselben,
Fig. 3 ein Arbeitsdiagramm der Vorrichtung nach Fig. 1, in welchem ein Mess- und ein Dichthub über der verfügbaren Prüfzeit aufgetragen sind, und
Fig. 4 ein Diagramm, das den Druckverlauf am Drucksensor über der Zeit beim Prüfen eines Behälters darstellt.

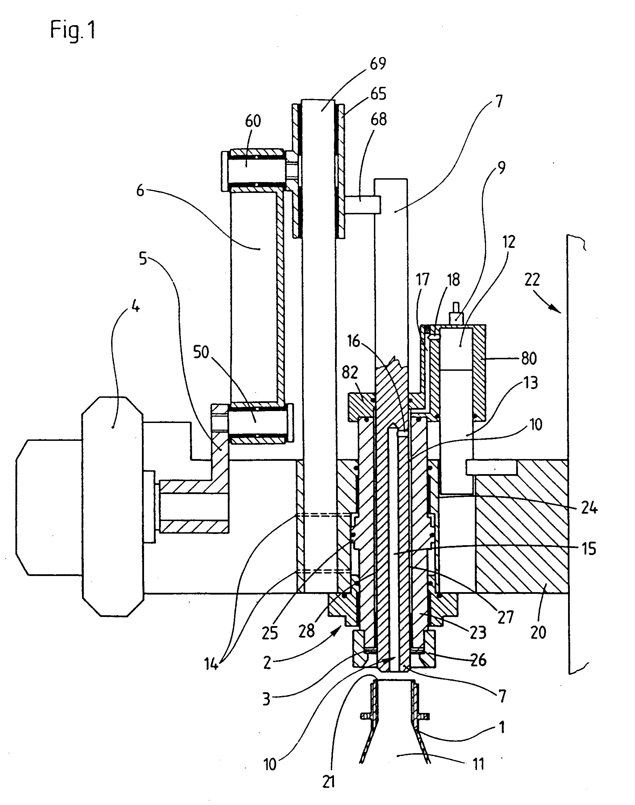

Fig. 1 zeigt in Seitenansicht und im Schnitt eine Vorrichtung zum Ueberprüfen des Volumens von Behältern. Als ein Beispiel eines solchen Behälters ist eine Flasche 1 angedeutet, die aus Glas oder Kunststoff, vorzugsweise PET, bestehen kann. Die Flasche 1 wird auf einem nicht dargestellten Förderer in die in Fig. 1 dargestellte Stellung unter der Vorrichtung bewegt und nach Ueberprüfung ihres Volumens weiterbefördert, z.B. zu einer Verpackungs- oder Füllstation, oder aber ausgeschieden, wenn eine bei der Ueberprüfung festgestellte Volumenabweichung ausserhalb einer bestimmten Toleranz liegen sollte.

Die Vorrichtung ist an einem Karussell oder Gestell 20 einer Inspektionsmaschine 22 befestigt. Die Vorrichtung hat einen in seiner Gesamtheit mit 2 bezeichneten Kopf, der in dem Gestell 20 vertikal verschiebbar angeordnet ist, so dass er abdichtend auf die Mündung 21 der Flasche 1 bewegt werden kann. Der Kopf 2 ist aussen als ein Hubkolben 23 ausgebildet, der in einem stationären Kurzhubzylinder 24 hin- und herbewegbar angeordnet ist. Am unteren Ende trägt der Hubkolben 23 eine Tülle 26, in welcher die Mündung 21 der Flasche 1 im wesentlichen spielfrei aufnehmbar ist. Der Hubkolben 23 trägt an seiner unteren Stirnfläche innerhalb der Tülle 26 eine Dichtung 3, die auf der Mündung 21 zu liegen kommt, wenn der Hubkolben 23 auf die Flasche 1 bewegt wird. Der Hubkolben 23 ragt oben und unten aus dem Kurzhubzylinder 24 hervor und ist durch im einzelnen nicht näher bezeichnete O-Ringe an Luafflächen des Kurzhubzylinders abgedichtet. Die Anordnung dieser O-Ringe und von weiteren O-Ringen in der Vorrichtung ist Fig. 1 ohne weiteres zu entnehmen und braucht hier nicht näher beschrieben zu werden. Der Hubkolben 23 ist aussen mit einem Bund 25 versehen, der den Innenraum des Kurzhubzylinders in einen oberen und einen unteren Zylinderraum unterteilt. Ueber Kanäle 14 ist diesen Zylinderräumen wechselweise Druckluft zuführbar, um den Hubkolben 23 auf- und abzubewegen.

Der Meßkolben 7 ist eine zylindrische Stange, die in einer in Fig. 1 gezeigten Meßkolbenausgangsposition etwa zur Hälfte in dem Kopf 2 und zur Hälfte außerhalb desselben angeordnet ist. Der Durchmesser des Meßkolbens 7, zumindest dessen in die Flasche 1 einführbarer Teil, ist der lichten Weite der Mündung 21 der Flasche 1 eng angepaßt. Der Hubkolben 23 enthält eine Längsbohrung 28, in der der Meßkolben 7 verschiebbar aufgenommen ist. Die Längsbohrung 28 ist auf aus Fig. 1 ersichtliche Weise abgedichtet. Zum Einführen des Meßkolbens 7 in die Flasche 1 ist eine Antriebseinrichtung 4 in Form eines pneumatischen Drehflügelantriebs vorgesehen, der mit einer Kurbel 5 verbunden ist. Die Antriebseinrichtung 4 ist somit ein Kurbeltrieb und treibt über einen Kurbelzapfen 50 ein Pleuel 6 an, das durch einen Pleuelzapfen 60 mit einem Schieber 65 verbunden ist, der seinerseits über einen Zapfen 68 mit dem oberen Ende des Meßkolbens 7 verbunden ist. Der Schieber 65 ist auf einer zu dem Meßkolben 7 parallelen Führung 69 verschiebbar angeordnet.

Mit dem oberen Ende des Kopfes 2 ist ein Zylinder 80 über einen Ansatz 82 auf in Fig. 1 dargestellte Weise fest verbunden. Der Ansatz 82 des Zylinders 80 bildet den oberen Verschluß eines in dem Kurzhubzylinder 24 zwischen der Wand der Längsbohrung 28 und dem Meßkolben 7 gebildeten Ringraums 27. An dem Gestell 20 ist ein stationärer Ausgleichskolben 13 mit einem Ende befestigt. Am anderen Ende taucht der Ausgleichskolben 13 verschiebbar in den unten offenen Zylinder 80 ein und begrenzt in diesem einen Kompensationsraum 12. Das Volumen des Kompensationsraums 12 ist veränderlich, je nach dem Abwärtshub, den der Kopf 2 aus der in Fig. 1 gezeigten festen Kopfausgangsposition heraus ausführt, bis er auf der Mündung 21 der Flasche 1 aufsitzt.

Ein insgesamt mit 10 bezeichneter Kanal verbindet das Innere 11 der Flasche 1 mit dem Kompensationsraum 12. Der Kanal 10 besteht aus einer ersten Bohrung 15 in dem Meßkolben 7, die über eine erste Querbohrung 16 in den den Meßkolben in dem Kopf 2 umgebenden Ringraum 27 mündet, und aus einer zweiten Bohrung 17 und einer zweiten Querbohrung 18, über die der Ringraum 27 mit dem Kompensationsraum 12 verbunden ist. An den Kompensationsraum 12 ist ein empfindlicher Drucksensor 9 angeschlossen.

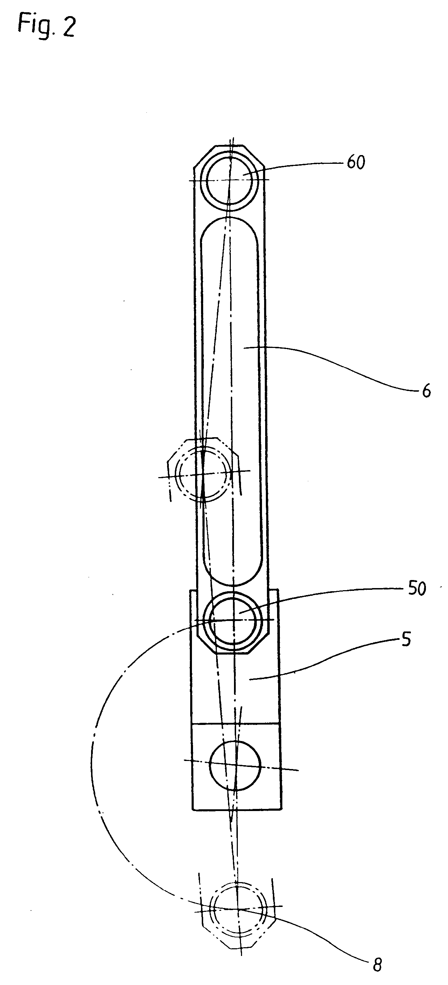

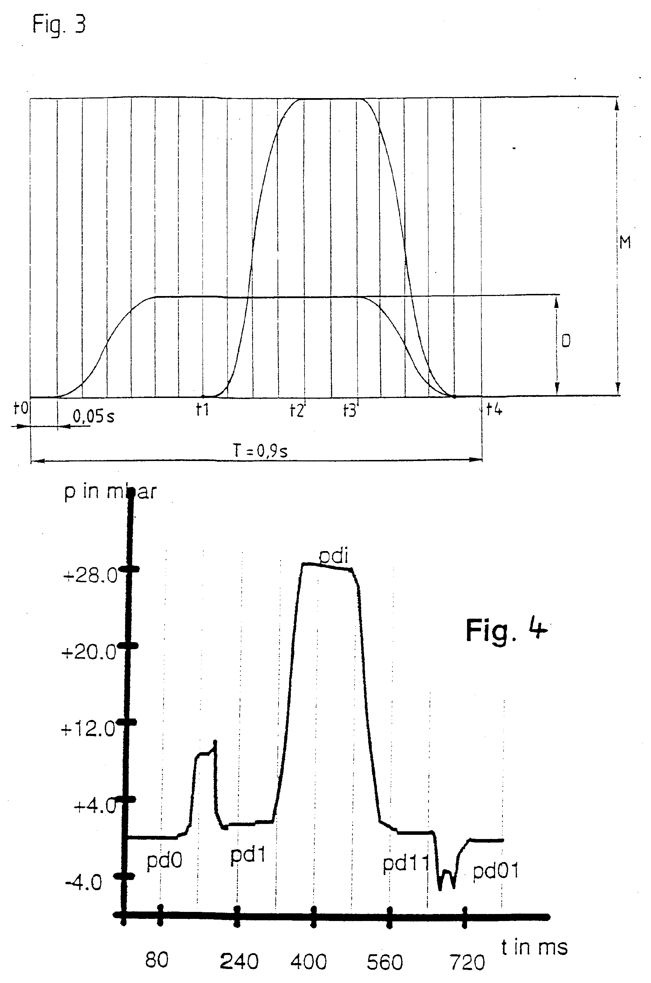

Unter zusätzlicher Bezugnahme auf die Fig. 2 und 3 wird nun die Arbeitsweise der Vorrichtung beschrieben.

Sobald sich eine Flasche 1 in der in Fig. 1 dargestellten Stellung unter dem Kopf 2 befindet, wird dieser durch seine pneumatische Antriebseinrichtung auf die Flasche abgesenkt, indem über den oberen Kanal 14 Druckluft aus einer nicht dargestellten Druckluftquelle eingeleitet wird. Dabei wird der Kopf 2 soweit abgesenkt, bis die Dichtung 3 die Flasche 1 mit vorgegebenem Druck abdichtet. Für diesen Dichthub D steht gemäß Fig. 3 eine Zeitspanne von einem Zeitpunkt t₀ bis zu einem Zeitpunkt t₁ zur Verfügung. In dem Zeitpunkt t₁ wird die pneumatische Antriebseinrichtung 4 des Meßkolbens 7 betätigt, um einen Meßhub M einzuleiten. Über die Kurbel 5 und das Pleuel 6 wird nun der Meßkolben 7 als ein Tauchkolben in die Flasche eingeführt, bis die Kurbel 5 in einem unteren Totpunkt 8 angelangt ist, Zeitpunkt t₂. Nun wird durch den Drucksensor 9 der in der Flasche 1 erzeugte Überdruck gemessen (und einer nicht dargestellten Auswerteeinrichtung zugeführt), wofür eine Zeitspanne von t₂ bis zu einem Zeitpunkt t₃ zur Verfügung steht. Ab dem Zeitpunkt t₃ bringt die Antriebseinrichtung 4 den Meßkolben 7 in die Meßkolbenausgangsposition zurück. Gleichzeitig wird auch der Kopf 2 zurück in die Kopfausgangsposition bewegt. In dem dargestellten Beispiel beträgt die gesamte mögliche Prüfzeit T, d.h. die Zeitspanne zwischen t₀ und t₄ 0,9 s. In Fig. 3 am Hubanfang und -ende dargestellte Verzögerungszeitspannen von jeweils 0,05 s sind systembedingt.

Das Meßvolumen ist das Volumen des Inneren 11 der Flasche 1 zuzüglich des Volumens des Kanals 10. Das Volumen des Kompensationsraums 12, das mit dem Meßvolumen über den Kanal 11 verbunden ist, wird einerseits durch die konstante Ausgangshöhe des Meßkolbens 7 und andererseits durch die variable Länge des Dichthubes des Kopfes 2 bestimmt. Das Kompensationsvolumen sorgt dafür, daß bei unterschiedlichen Flaschenhöhen immer genau gleiche Kompressionsverhältnisse vorliegen. Unterschiedliche Flaschenhöhen werden nämlich durch den Ausgleichskolben 13 kompensiert, der in Gegenrichtung in den Zylinder 80 eintaucht und das komprimierte Meßvolumen immer genau konstant hält.

Figur 4 zeigt den Druckverlauf am Drucksensor über der Zeit. Gut erkennbar ist der Druckanstieg und Druckabfall im Zeitbereich von 160 ms, welcher beim Aufsetzen des Kopfes auf den Behälter erfolgt. Dieser Druckverlauf wird von der Auswertschaltung für die Sensorausgangssignale erkannt und als Startpunkt für den nachfolgenden Messzyklus (Messwerte im Bereich pd1, pdi, pd11 und pd01). Verwendet werden kann dabei die steigende Flanke, die Spitze oder die fallende Flanke des Druckanstieges. Aus den gemessenen Druckwerten kann das Behältervolumen ermittelt werden.

Bevorzugterweise wird ferner aus den zwei Druckmesswerten in den Bereichen pd1 und pd11 das Vorliegen einer Leckage des Behälters ermittelt. Der Durchmesser des Lecks ist dabei proportional zu der Grösse pd1-pd11- Konstante.

## Patentansprüche

1. Verfahren zum Prüfen von Behältern, insbesondere von Glas- oder Kunststoffflaschen (1), bei welchem ein Kopf (2) abdichtend auf die Mündung (21) des Behälters gesetzt wird, das Innere des Behälters mittels eines relativ zum Kopf verschiebbaren Messkolbens (7) unter Druck gesetzt wird und der Druck mittels eines Drucksensors (9) gemessen wird, um das Behältervolumen zu prüfen, dadurch gekennzeichnet, dass der Druckverlauf beim Aufsetzen des Kopfes (2) auf den Behälter durch den Drucksensor (9) erfasst und als Startsignal für die nachfolgende Verschiebung des Messkolbens (7) und die Druckmessung verwendet wird.

2. Verfahren nach Anspruch 1, dadurch gekennzeichnet, dass mehrere Druckmesswerte zu verschiedenen Zeiten ermittelt werden, und dass mindestens zwei Druckmesswerte verknüpft werden, um ein Lecken des Behälters festzustellen.

3. Vorrichtung zur Durchführung des Verfahrens nach Anspruch 1 oder 2, mit einem abdichtend auf eine Mündung (21) des Behälters (1) bewegbaren Kopf (2),
mit einem relativ zu dem Kopf verschiebbaren Messkolben (7), mittels welchem das Innere (11) des Behälters mit Druck beaufschlagbar ist, und
mit einem Drucksensor (9) zum Messen des Druckes im Inneren des Behälters,
gekennzeichnet durch eine Antriebseinrichtung (14, 24, 25) zum Bewegen des Kopfes (2) aus einer festen Kopfausgangsposition heraus auf die Mündung (21) des Behälters (1), einen Zylinder (80), der mit dem Kopf (2) fest verbunden ist, einen stationären Ausgleichskolben (13), der in den Zylinder (80) verschiebbar eintaucht und in diesem einen Kompensationsraum (12) begrenzt, und durch einen Kanal (10), der das Innere (11) des Behälters (1) mit dem Kompensationsraum (12) verbindet, wobei der Drucksensor (9) in Druckverbindung mit dem Kompensationsraum (12) steht, und durch eine mit dem Drucksensor verbundene Auswertschaltung, durch welche die beim Aufsetzen des Kopfes (2) auf dem Behälter (1) im Kompensationsraum (12) entstehende Druckschwankung detektierbar und das Startsignal für die Verschiebung des Messkolbens (7) und die Druckmessung erzeugbar ist.

4. Vorrichtung nach Anspruch 3, dadurch gekennzeichnet, dass die Auswertschaltung zur Ausführung von drei Druckmessungen in vorbestimmtem Zeitabstand von der Detektion der Druckschwankung ausgestaltet ist.

5. Vorrichtung nach Anspruch 4, dadurch gekennzeichnet, dass die Auswertschaltung zur Verknüpfung der drei Druckmesswerte ausgestaltet ist, um das Volumen des Behälters zu ermitteln.

6. Vorrichtung nach einem der Ansprüche 4 oder 5, dadurch gekennzeichnet, dass die Auswertschaltung zur Verknüpfung des ersten und des dritten Druckmesswertes ausgestaltet ist, um ein Leck im Behälter zu erkennen.

7. Vorrichtung nach einem der Ansprüche 3 bis 6, dadurch gekennzeichnet, dass der Messkolben (7) als durch den Kopf (2) und die Mündung (21) hindurch in den Behälter (1) einführbarer Tauchkolben ausgebildet ist.

8. Vorrichtung nach Anspruch 7, dadurch gekennzeichnet, dass wenigstens der in den Behälter (1) einführbare Teil des Messkolbens (7) zylindrisch ist und einen Durchmesser hat, der der lichten Weite der Mündung (21) des Behälters (1) eng angepasst ist.

9. Vorrichtung nach Anspruch 7 oder 8, gekennzeichnet durch eine zweite Antriebseinrichtung (4) zum Einführen des Messkolbens (7) aus einer festen Messkolbenausgangsposition heraus in den Behälter (1).

10. Vorrichtung nach einem der Ansprüche 3 bis 9, dadurch gekennzeichnet, dass der Ausgleichskolben (13) den gleichen Durchmesser wie der Messkolben (7) hat.

11. Vorrichtung nach einem der Ansprüche 3 bis 10, dadurch gekennzeichnet, dass der Kanal (10) aus einer ersten Bohrung (15) in dem Messkolben (7), die in einen den Messkolben (7) in dem Kopf (2) umgebenden Ringraum (27) mündet, und aus einer zweiten Bohrung (17), die den Ringraum (27) mit dem Kompensationsraum (12) verbindet, besteht.

12. Vorrichtung nach Anspruch 9, dadurch gekennzeichnet, dass die zweite Antriebseinrichtung (4) ein Kurbeltrieb ist.

13. Vorrichtung nach Anspruch 12, dadurch gekennzeichnet, dass zwischen dem Kurbeltrieb (4) und dem Messkolben (7) eine zu dem Messkolben (7) parallele Führung (69) vorgesehen ist, auf der ein Schieber (65) angeordnet ist, welcher einerseits mit dem Messkolben (7) und andererseits durch ein Pleuel (6) mit dem Kurbeltrieb (4) verbunden ist.

14. Vorrichtung nach Anspruch 12 oder 13, dadurch gekennzeichnet, dass der Kurbeltrieb (4) ein pneumatischer Drehflügelantrieb ist.

15. Vorrichtung nach einem der Ansprüche 3 bis 14, dadurch gekennzeichnet, dass der Kopf (2) aussen als ein Hubkolben (23) ausgebildet und in einem stationären Kurzhubzylinder (24) hin- und herbewegbar angeordnet ist.

16. Vorrichtung nach Anspruch 15, dadurch gekennzeichnet, dass der Hubkolben (23) pneumatisch betätigbar ist.

## Claims

1. Method for inspecting containers, more particularly glass or plastic bottles (1), wherein a head (2) is placed onto the mouth (21) of the container so as to seal it, the interior of the container is put under pressure by means of a measurement piston (7) adapted to be displaced relative to the head, and the pressure is measured by means of a pressure sensor (9) so as to check the volume of the container, characterised in that the march of pressure is detected by the pressure sensor (9) as the head (2) is placed onto the container and is used as a starting signal for subsequent displacement of the measurement piston (7) and measurement of the pressure.

2. Method according to claim 2, characterised in that a plurality of measured pressure levels are established at various times and that at least two measured pressure levels are combined to detect leakage from the container.

3. Apparatus for carrying out the method according to claim 1 or 2, comprising a head (2) adapted to be moved sealingly onto a mouth (21) of the container (1),
a measurement piston (7) adapted for displacement relative to the head and by means of which pressure can be applied to the interior (11) of the container, and
a pressure sensor (9) to measure the pressure in the interior of the container,
characterised by a drive mechanism (14, 24, 25) to move the head (2) out of a fixed head starting position and onto the mouth (21) of the container (1), a cylinder (80) which is permanently joined to the head (2), a stationary compensating piston (13) which is plunged displaceably into the cylinder (80) and in the latter delimits a compensating chamber (12), and by a duct (10) connecting the interior (11) of the container (1) to the compensating chamber (12), the pressure sensor (9) being linked in pressure to the compensating chamber (12), and by an evaluation circuit linked to the pressure sensor and which can be used to detect the fluctuation in pressure produced in the compensating chamber (12) when the head (2) is set on the container (1) and to generate the start signal for the displacement of the measurement piston (7) and the pressure measurement.

4. Apparatus according to claim 3, characterised in that the evaluation circuit is configured to perform three pressure measurements at a preset interval from detection of the pressure fluctuation.

5. Apparatus according to claim 4, characterised in that the evaluation circuit is configured to combine the three measured pressure levels in order to determine the volume of the container.

6. Apparatus according to either of claims 4 or 5, characterised in that the evaluation circuit is configured to combine the first and the third measured pressure levels in order to recognise a leak in the container.

7. Apparatus according to any of claims 3 to 6, characterised in that the measurement piston (7) is in the form of a plunger adapted to be introduced through the head (2) and the mouth (21) into the container (1).

8. Apparatus according to claim 7, characterised in that at least that part of the measurement piston (7) that is adapted to be introduced into the container (1) is cylindrical and has a diameter such that it snugly fits inside the mouth (21) of the container (1).

9. Apparatus according to claim 7 or 8, characterised by a second drive mechanism (4) for introducing the measurement piston (7) into the container (1) from a fixed measurement piston starting position.

10. Apparatus according to any of claims 3 to 9, characterised in that the compensating piston (13) has the same diameter as the measurement piston (7).

11. Apparatus according to any of claims 3 to 10, characterised in that the duct (10) consists of a first bore (15) in the measurement piston (7) opening into an annular compartment (27) surrounding the measurement piston (7) in the head (2), and of a second bore (17) which connects the annular compartment (27) to the compensating chamber (12).

12. Apparatus according to claim 9, characterised in that the second drive mechanism (4) is a crank drive.

13. Apparatus according to claim 12, characterised in that between the crank drive (4) and the measurement piston (7) there is provided a guide (69) parallel to the measurement piston (7) and on which is arranged a slide (65) which on the one hand is joined to the measurement piston (7) and on the other hand by a connecting rod (6) to the crank drive (4).

14. Apparatus according to claim 12 or 13, characterised in that the crank drive (4) is a pneumatic blade type drive.

15. Apparatus according to any of claims 3 to 14, characterised in that the external design of the head (2) is that of a lifting piston (23) and that it is arranged so as to move to and fro in a stationary short-stroke cylinder (24).

16. Apparatus according to claim 15, characterised in that the lifting piston (23) is pneumatically operated.

## Revendications

1. Procédé de contrôle de récipients, notamment de bouteilles (1) de verre ou de matière plastique, dans lequel une tête (2) est posée de façon étanche sur la bouche (21) du récipient, l'intérieur de celui-ci est mis sous pression au moyen d'un piston de mesure (7) mobile en coulissement par rapport à la tête, et la pression est mesurée au moyen d'un capteur de pression (9) afin de vérifier le volume du récipient, caractérisé en ce que l'évolution de la pression est détectée par le capteur de pression (9) lors de la mise en place de la tête (2) sur le récipient et est utilisée en tant que signal de départ pour le déplacement suivant du piston de mesure (7) et pour la mesure de la pression.

2. Procédé selon la revendication 1, caractérisé en ce que plusieurs valeurs de mesure de pression sont relevées à différents moments, et en ce qu'au moins deux valeurs de mesure de pression sont mises en relation de manière à détecter une fuite du récipient.

3. Dispositif pour la mise en oeuvre du procédé selon la revendication 1 ou 2, comprenant une tête (2) pouvant être posée de façon étanche sur la bouche (21) du récipient (1),
comprenant un piston de mesure (7) pouvant être déplacé relativement à la tête, à l'aide duquel l'intérieur (11) du récipient peut être mis sous pression, et
comprenant un capteur de pression (9) destiné à mesurer la pression régnant à l'intérieur du récipient,
caractérisé par un dispositif d'entraînement (14, 24, 25) destiné à déplacer la tête (2) depuis une position de départ fixe de la tête jusqu'en appui sur la bouche (21) du récipient (1), un cylindre (80) relié rigidement à la tête (2), un piston compensateur stationnaire (13) pouvant être déplacé de manière à plonger dans le cylindre (80) et délimitant dans celui-ci une chambre de compensation (12), et par un canal (10) qui relie l'intérieur (11) du récipient (1) à la chambre de compensation (12), le capteur de pression (9) étant placé en communication de pression avec la chambre de compensation (12), et par un circuit d'analyse relié au capteur de pression, grâce auquel la variation de pression provoquée dans la chambre de compensation (12) lors de la mise en place de la tête (2) sur le récipient (1) peut être détectée, et grâce auquel le signal de départ pour le déplacement du piston de mesure (7) et pour la mesure de la pression peut être généré.

4. Dispositif selon la revendication 3, caractérisé en ce que le circuit d'analyse est configuré pour effectuer trois mesures de pression, à des intervalles de temps prédéterminés, à compter de la détection de la variation de la pression.

5. Dispositif selon la revendication 4, caractérisé en ce que le circuit d'analyse est configuré pour mettre en relation les trois valeurs de mesure de manière à déterminer le volume du récipient.

6. Dispositif selon l'une des revendications 4 ou 5, caractérisé en ce que le circuit d'analyse est configuré pour mettre en relation la première et la troisième valeurs de mesure de pression de manière à détecter une fuite du récipient.

7. Dispositif selon l'une des revendications 3 à 6, caractérisé en ce que le piston de mesure (7) est réalisé sous forme d'un piston plongeur pénétrant dans le récipient à travers la tête (2) et la bouche (21).

8. Dispositif selon la revendication 7, caractérisé en ce qu'au moins la partie du piston de mesure (7) qui pénètre dans le récipient, est cylindrique et présente un diamètre qui est étroitement ajusté au diamètre intérieur de la bouche (21) du récipient (1).

9. Dispositif selon la revendication 7 ou 8, caractérisé par un deuxième dispositif d'entraînement (4) destiné à introduire le piston de mesure (7) dans le récipient (1) à partir d'une position de départ fixe du piston de mesure.

10. Dispositif selon l'une des revendications 3 à 9, caractérisé en ce que le piston de compensation (13) présente le même diamètre que le piston de mesure (7).

11. Dispositif selon l'une des revendications 3 à 10, caractérisé en ce que le canal (10) est constitué par un premier perçage (15) ménagé dans le piston de mesure (7), débouchant dans une chambre annulaire (27) entourant le piston de mesure (7) dans la tête (2), et par un deuxième perçage (17) reliant la chambre annulaire (27) à la chambre de compensation (12).

12. Dispositif selon la revendication 9, caractérisé en ce que le deuxième dispositif d'entraînement (4) est un mécanisme à manivelle.

13. Dispositif selon la revendication 12, caractérisé en ce qu'un guidage (69) parallèle au piston de mesure (7) est prévu entre le mécanisme à manivelle (4) et le piston de mesure (7), guidage sur lequel est disposé un coulisseau (65) qui est relié d'un côté au piston de mesure (7) et de l'autre côté, par l'intermédiaire d'une bielle (6), au mécanisme à manivelle (4).

14. Dispositif selon la revendication 12 ou 13, caractérisé en ce que le mécanisme à manivelle (4) est un moteur pneumatique à palettes rotatives.

15. Dispositif selon l'une des revendications 3 à 14, caractérisé en ce que la tête (2) est réalisée extérieurement sous forme d'un piston alternatif (23) et est disposée de façon mobile en va-et-vient dans un cylindre stationnaire (24) à faible course.

16. Dispositif selon la revendication 15, caractérisé en ce que le piston alternatif (23) peut être actionné de façon pneumatique.
